# EUROPÄISCHE PATENTANMELDUNG

(11) **EP 1 452 659 A2**
(43) Veröffentlichungstag der Anmeldung: **01.09.2004**
(21) Anmeldenummer: 04003819.2
(22) Anmeldetag: 19.02.2004
(51) Int. Cl.: E04C 2/16

(54) **Gegenstände, insbesondere Möbel aus schichtverleimtem Bambus**

(30) Priorität: 27.02.2003 DE 10308628
(71) Anmelder: Wassmer, Markus, 80639 München (DE); Kurz, Jan, 80337 München (DE)
(72) Erfinder: Wassmer, Markus, 80639 München (DE); Kurz, Jan, 80337 München (DE)
(74) Vertreter: Alber, Norbert, Dipl.-Ing.

(57) **Zusammenfassung**

Die Erfindung betrifft ein Verfahren sowie eine Vorrichtung zum Herstellen von Möbeln sowie die danach hergestellten Möbel, bei denen Bambusstreifen auf einfache Art und Weise zu tragfähigen und beinahe unbegrenzt verformbaren Stäben geformt und mit plattenförmigen Elementen zu kompletten Möbelstücken konfektioniert werden können, wobei folgendes Verfahren zum Herstellen von Stäben mit massivem Querschnitt aus übereinander gelegten und verleimten Schichten aus Bambusstreifen (3a,b,c,...) insbesondere für Möbelstücke, die Pakete (4) aus Bambusstreifen (3a,b,c,..) während der Herstellung der Stäbe auch um die Längsachse des Paketes (4) tordiert werden und in diesem Zustand abgekühlt und verleimt werden.

## Beschreibung

### I. Anwendungsgebiet

Die Erfindung betrifft ein Verfahren sowie eine Vorrichtung zum Herstellen von Möbeln sowie die danach hergestellten Möbel.

### II. Technischer Hintergrund

Während zur Aufbewahrung von Gegenständen bestimmte Möbel wie z. B. Schränke vorzugsweise aus plattenförmigen Einzelteilen bestehen, sind andere Möbel, z. B. Sitzmöbel, vorzugsweise aus die Tragstruktur bildenden Stäben mit geringem Querschnitt und daran befestigten flächigen Elementen aufgebaut. Nach demselben Schema lassen sich auch Schränke und andere Möbelstücke herstellen.

Dabei ging das Bestreben dahin, die Stäbe - aus Gewichts- und optischen Gründen - mit möglichst geringem Querschnitt und dennoch ausreichender Stabilität auszubilden.

Zu diesem Zweck wurden in der Vergangenheit Stäbe aus z. B. Metallrohr verwendet. Wenn das Möbelstück jedoch durchgängig aus Naturprodukten bestehen sollte, und - wie vor allem bei Sitzmöbeln notwendig - die Stäbe hierfür Biegungen aufweisen mussten, bestand von vornherein das Problem, dass nachwachsender Rohstoff wie z. B. Holz nicht in der gewünschten Biegung vorlag und deshalb entweder aus großflächigen z. B. Platten in dieser Form herausgeschnitten werden musste (mit großem Materialverlust) oder entsprechende gerade Stäben gebogen werden mussten.

In diesem Zusammenhang ist es bei Holz bereits bekannt, derartige Stäbe entweder aus massivem Holz oder auch aus Holzschichten zusammengesetzt zu biegen, indem das Holz durch Einwirkung von Dampf unter Überdruck über eine gewisse Zeit erweicht wird, indem durch die Dampfeinwirkung die klebenden Bestandteile des Holzes, vor allem Lignin, erweicht werden, und danach das Holz in die gewünschte Form gebracht und durch Abkühlung wieder in der gewünschten Form zur Erstarrung gebracht wird.

Trotz der relativ hohen Beaufschlagungszeit und des dabei vorherrschenden Überdruckes, der sich immer über das gesamte Material, welches an nur einer Stelle gebogen werden sollte, erstreckte, erfolgte dabei ― insbesondere bei schichtverleimten Stäben ― die Biegung jeweils nur um eine quer zur Längsrichtung des Stabs liegende Achse, also keine Torsion um die Längsrichtung des Stabs insbesondere unter Beibehaltung der Verlaufsrichtung des Stabs insgesamt.

Darüber hinaus ist ein Halbzeug aus Holz bekannt, welches ― vorzugsweise als Plattenmaterial, aber auch in Form von Stäben ― im biegeweichen Zustand gehandelt wird, indem der Holzwerkstoff mittels Stauchung in Längsrichtung der Fasern und ggf. zusätzliche Bedämpfung bzw. chemische Behandlung biegeweich gemacht und in diesem Zustand luftdicht verpackt in den Handel gebracht wird. Nach Öffnen der Verpackung kann dieser Holzwerkstoff mit geringem Kraftaufwand wiederum um eine quer zur Längserstreckung der Fasern liegende Achse gebogen und geformt und in diesem Zustand zur Erstarrung gebracht werden allein durch Abtrocknen in der Umgebungsluft.

Ferner hat - einhergehend mit der Globalisierung der Materialbeschaffung - die Verwendung von Bambus im Möbelbau auch in Europa Einzug gefunden. Bekannt sind hierbei Möbelkonstruktionen, bei denen die tragende Struktur aus ganzen Bambusrohren bestand, und insbesondere flächige Elemente primär dem Sichtschutz, weniger der Stabilität dienten, und nur aus miteinander verflochtenen Bambusstreifen bestanden oder aus einem Holzwerkstoff, der lediglich aus optischen Gründen z. B. auf der Außenseite mit Bambusstreifen belegt war.

Es sollen auch bereits Möbelkonstruktionen aus Bambus existieren, bei denen die Stäbe aus übereinander gelegten Bambusstreifen bestehen, jedoch ähnlich der Verwendung von schichtverleimtem Holz nur um eine quer zur Längserstreckung der Stäbe liegende Achse gebogen wurden.

Auch vorgefertigte Plattenmaterialien aus stumpf in einer Ebene nebeneinander gelegten und verleimten Bambusstreifen sind bekannt.

Die Bambusstreifen werden dabei vorzugsweise mit rechteckigem Querschnitt aus dem Rohrquerschnitt eines Bambusrohres herausgeschnitten, in aller Regel indem zunächst das Bambusrohr in einzelne Sektoren zerschnitten und anschließend die im Querschnitt gekrümmten Segmente mittels Hobeln oder Fräsen zu einem rechteckigen Querschnitt, insbesondere unter Fortfall der harten Außenhaut des Bambusrohres, gefräst oder gehobelt wird.

Im Inneren der einzelnen Bambusstreifen ergibt sich dadurch immer noch eine inhomogene Struktur mit trockeneren, härteren Schichten im äußeren Bereich und feuchteren, weicheren Schichten im dem gegenüberliegenden inneren Bereich, zumindest vor der Trocknung der Bambusstreifen.

An dieser Stelle muss unbedingt auf die Unterschiede zwischen Holz und Bambus eingegangen werden:
Zunächst ist Bambus biologisch betrachtet kein Baum oder Strauch, sondern ein Gras.

Auch hinsichtlich des inneren Aufbaus bestehen erhebliche Unterschiede:
Während Holz die Leitzellen zum Flüssigkeitstransport, vor allem in den Außenbereichen direkt unter der Rinde, hat und daher ein Baumstamm im Außenbereich den höchsten und im Kernbereich den niedrigsten Feuchtegehalt aufweist, ist es bei Bambus genau umgekehrt:
   Im äußeren Drittel des Rohres befinden sich die Stützzellen, die dem Bambus seine Festigkeit geben, während nach innen die Leitzellen und Speicherzellen für das aufzunehmende Wasser mit den enthaltenen Aufbaustoffen folgen. Demzufolge verhalten sich die beiden Stoffe absolut ungleich, zumal noch hinzukommt, dass das physikalische Verhalten des Bambus aufgrund der Hohlkonstruktion mit den in axialer Richtung vorhandenen Querwänden nochmals völlig anders ist.

Zusätzlich ist der Feuchtegehalt von Bambusrohren beim Schnitt nicht nur grundsätzlich höher als bei Holz, sondern schwankt auch sehr viel stärker in Abhängigkeit vom Standort, momentanem Klima und, betrachtet in Querschnittsrichtung des Bambusrohres als auch in axialer Längsrichtung, von der Größe.

Ein weiterer Unterschied besteht darin, dass die Fasern bei Bambus sehr gleichmäßig parallel liegen, während sich bei Holz die Fasern häufig aneinander annähern und wieder voneinander entfernen und vor allem an Astgabeln und Ähnlichem überhaupt nicht mehr parallel zueinander liegen, sondern unter Umständen im 90°-Winkel auseinanderstreben.

### III. Darstellung der Erfindung

### a) Technische Aufgabe

Es ist daher die Aufgabe gemäß der Erfindung, ein Verfahren sowie eine Vorrichtung und damit herstellbare Möbel zu schaffen, bei denen Bambusstreifen auf einfache Art und Weise zu tragfähigen und beinahe unbegrenzt verformbaren Stäben geformt und mit plattenförmigen Elementen zu kompletten Möbelstücken konfektioniert werden können.

### b) Lösung der Aufgabe

Diese Aufgabe wird durch die Merkmale des Ansprüche 1, 3, 9 und 13 gelöst. Vorteilhafte Ausführungsformen ergeben sich aus den Unteransprüchen.

Indem die Pakete aus Bambusstreifen auch um die Längsachse des Paketes tordiert werden, und nicht nur wie beim Stand der Technik um eine Biegeachse gebogen werden, die genau senkrecht zur Längsachse des Paketes und vorzugsweise parallel zur Ebene der Streifen liegt, werden als Vorteil erzielt:
- sehr schlanke, in Querrichtung kaum auskragende, Träger-Konstruktionen und
- Ausrichtung der Schichtungsebene der Pakete nach Wunsch parallel zu oder quer zu der Haupt-Belastungsrichtung der Stäbe im späteren Einsatz,
- gerade Stäbe, deren Belastbarkeit in Querrichtung größer ist als ohne Tordierung,
- zusätzliche optische Effekte und
- sofern ein anschließendes Verschleifen in Kauf genommen wird, die Herstellung von rundzylindrischen, geraden Stäben, die im Inneren durch Tordieren versteift wurden, vor allem wenn die Bambusstreifen nicht nur übereinander gelegt sondern zusätzlich nebeneinander gelegt werden, so dass also der Querschnitt eine Rasterung in beiden Querrichtungen aufweist.

Die lediglich partielle Bedämpfung im Bereich der vorgesehenen Biegung bzw. Tordierung ermöglicht eine schnellere Herstellung von Möbelstücken, da die nächste Biegung bzw. Tordierung bereits vorbereitet und bearbeitet werden kann, während die in Verlaufsrichtung vorangegangene Bearbeitung noch am Abkühlen und Erstarren ist.

Eine Kombination beider Maßnahmen ergibt auch die Kombination der dadurch erzielbaren Vorteile. Durch das Auseinandernehmen der verformten und erstarrten Pakete und erst anschließendes Auftragen von Leim bzw. Kleber und Verkleben der Pakete zu Stäben können zusätzliche Fein-Ausrichtungen vorgenommen werden, die die Nachbearbeitung durch Schleifen etc. minimieren.

Durch das Niedrighalten der Streifendicke, insbesondere jedoch das Nicht-Unterschreiten einer Schichtdicke von 3 mm, wird ein Optimum aus geringer Bedämpfungzeit einerseits und Minimierung des Arbeitsaufwandes für das Verkleben allzuvieler Schichten andererseits erzielt, indem die Schichtanzahl bei in der Regel maximal fünf belassen werden kann.

Durch die Wahl der geeigneten Schichtdicke und die prinzipielle Auswahl von Bambus für die Herstellung der Stäbe kann erreicht werden, dass trotz hoher Belastbarkeit des fertigen Möbels die Verformung der geschichteten Pakete mit so geringem Kraftaufwand möglich ist, dass die Verformung von Hand geschieht, also z. B. durch Anlegen und Fixieren des geraden Paketes an einer Schablone auf der einen Seite der vorgesehenen Schablonen-Biegung und Herumbiegen um die Biegung der Schablone von Hand und lediglich nachfolgendes Fixieren des Paketes an bzw. nach der Biegung an der Schablone.

Vorzugsweise erstreckt sich dabei eine Schablone über die gesamte Länge des zu formenden Trägers, so dass durch abwechselndes Bedämpfen und Anlegen der einzelnen Abschnitte des Paketes entlang der Schablone der gesamte Träger in seiner Endform hergestellt werden kann.

Eine andere Möglichkeit stellt das Auftragen des Leimes bzw. Klebers zwischen den Schichten vor der Erwärmung dar, was insbesondere dann möglich ist, wenn es sich um einen Heißkleber handelt, der also erst durch Erwärmung teigig bzw. flüssig und klebend wird. Dies vereinfacht den Arbeitsablauf drastisch, indem nach dem Erstarren des Paketes aus Streifen die Streifen nicht mehr auseinandergenommen, mit Leim bestrichen und neu zusammengefügt und gepreßt werden müssen, sondern ein und dieselbe Fixierung und damit automatisch Verpressung des Paketes, wie sie für das Erstarren nach dem Bedämpfen und Verformen notwendig ist, gleichzeitig der Verleimung dient.

Besonders formstabile Träger ergeben sich, wenn die Bambusstreifen innerhalb des Paketes immer mit den entsprechenden Seiten gegeneinander gelegt werden, also Außenseite gegen Außenseite und Innenseite gegen Innenseite liegt, wobei insbesondere auf den Außenseiten des Paketes auch jeweils die Außenseite des äußeren Streifens liegt, die dichter als die Innenflächen sind und damit eine dichtere Oberfläche des Möbelstückes ergeben.

Vorzugsweise umfaßt ein Paket immer eine gerade Anzahl von Streifen, bevorzugt vier Streifen, um dies zu erreichen. Dabei ist die Dimensionierung der Streifen hinsichtlich Breite und Dicke so gewählt, dass das fertige Paket entweder mittensymmetrisch, insbesondere quadratisch oder rund, ist oder der größte Durchmesser des Paketes in der Richtung der Ebene der Streifen liegt, insbesondere bei einem rechteckigen Querschnitt.

Um eine möglichst hohe Stabilität gegen Querkräfte mit möglichst geringem Materialaufwand zu erreichen, werden die Stäbe so gelegt, dass die größte zu erwartende Querbelastung in Richtung der Ebene der einzelnen Streifen erfolgt, also in der Regel in Richtung der größeren Querachse des Paketes bzw. Stabes.

Da im Verlauf eines Stabes sich die Angriffsrichtung der zu erwartenden Querbelastung ändern kann, wird die Orientierung seines Querschnittes durch Tordieren des Stabes entsprechend geändert.

Das abschnittweise Bedämpfen eines Paketes erfolgt durch Anlegen einer Manschette um den zu verformenden Längenbereich des Paketes herum, um mit Hilfe der Manschette Dampf auf das Paket in diesem Bereich einwirken zu lassen. Dies wird erzielt, indem der Dampf in den Zwischenraum zwischen Manschette und Außenumfang des Paketes eingebracht und insbesondere ständig nachgeliefert wird und insbesondere dabei die Streifen des Paketes, beispielsweise mit Hilfe der Manschette, auf definierten Abstand zueinander gebracht werden, um den Dampf zwischen die Schichten eindringen und damit alle Streifen und Schichten des Paketes gleichmäßig der Wirkung des Dampfes unterwerfen zu können.

In einer bevorzugten Ausführungsform erfolgt während des Bedampfens zusätzlich eine Beheizung dieser Manschette, um das Niederschlagen von Kondenswasser an der Manschette und damit evtl. Feuchtigkeitsflecken auf dem Bambus zu vermeiden. Zur Intensivierung der Bedämpfung und vor allem Gleichmäßigkeit des Dampfflusses kann der Durchgangskanal der Manschette in dessen mittleren Bereich größer sein als in den Endbereichen, welche insbesondere durch Dichtungen gegenüber dem Außenumfang des Paketes abgedichtet ist.

Während, der Verformung und auch vorher werden die Bambusstreifen weder einer Stauchung noch einer Dehnung, insbesondere nicht in Längsrichtung der Streifen, unterworfen, um den Zusammenhang zwischen den einzelnen Fasern des Bambusmaterials nicht zu zerstören. Die innerhalb eines Bambusstreifens durch Biegung partiell über dessen Querschnitt auftretende Dehnung und Stauchung durch das Verformen kann dabei nicht vermieden werden.

Bei dieser Art der Bearbeitung spielt die verwendete Dämpf-Manschette eine entscheidende Rolle:

Der Durchgangskanal durch die Manschette, in die das Paket eingelegt wird, ist vorzugsweise gerade, entspricht also der Ausgangsform des Paketes. Das Paket steht auf beiden Seiten aus der Manschette vor, damit diese Manschette an jeder beliebigen Stelle eines geraden Abschnittes des Paketes angesetzt werden kann. Zur leichteren Handhabung besteht die Manschette vorzugsweise aus wenigstens zwei in Längsrichtung geteilten Teilen, die insbesondere über ein Scharnier miteinander verbunden und um das Paket herum gegeneinander geklappt und miteinander verbunden werden können. Der Querschnitt des Durchgangskanals ist im mittleren Bereich vorzugsweise größer als an den stirnseitigen Enden und weist wenigstens eine Dampfeintrittsöffnung auf.

Der Dampfaustritt erfolgt entweder über den stirnseitigen Spalt zwischen dem Paket und der Manschette, oder - falls diese gezielt abgedichtet ist - über eine zusätzliche Dampfabsaugöffnung in der Manschette, die vorzugsweise in Längsrichtung an dem der Eintrittsöffnung gegenüberliegenden Ende der Manschette angeordnet ist. Wenn die Manschette zusätzlich beheizbar ist, bleibt der Dampf weitestgehend in Dampfform und kondensiert nicht, wodurch die Bedämpfungswirkung erhöht und die Dampfversorgung reduziert wird. Wenn die Manschette zusätzlich mit einem Temperatursensor und/oder einem Zeitvorwahlschalter für die Bedämpfungszeit ausgestattet ist, ist der Personalaufwand beim Bedämpfen niedrig.

Die aus derartigen Elementen zusammengesetzten Bambusmöbel weisen also eine Tragstruktur aus Stäben mit geringem, massivem Querschnitt aus dem beschriebenen miteinander verleimten Bambusstreifen auf, an der flächige Elemente als Wendeböden; Deckel, Sitzflächen, Sitzlehnen oder Tischplatten etc. befestigt werden können. Die flächigen Elemente können dabei wiederum aus diesmal nebeneinandergelegten Bambusstreifen bestehen, deren Hauptebenen sich somit aneinander in der ebenen Richtung anschließen, und die vorzugsweise nur aus einer Lage solcher Bambusstreifen bestehen, um eine Verformung dieser insbesondere einlagigen Platten zu ermöglichen, allerdings in konventioneller Form, also vorzugsweise nur um eine Querachse herum, die insbesondere lotrecht zur Verlaufsrichtung der Streifen, jedoch parallel zu deren Hauptebene, liegt.

Die mehrschichtigen Träger können sich dabei in zwei oder auch mehr Äste verzweigen und mit den Ästen anderer Träger wiederum verbunden, insbesondere verleimt, werden.

Die Träger werden dabei so im Möbelstück eingesetzt, dass die in Querrichtung auftretende Hauptbelastung in Richtung der Ebene der einzelnen Bambusstreifen erfolgt, und nicht quer hierzu, es sei denn dass gezielt ein starkes Federn der Träger erwünscht ist.

### c) Ausführungsbeispiele

Ausführungsformen gemäß der Erfindung sind im folgenden anhand der Figuren beispielhaft näher beschrieben. Es zeigen:
- Fig. 1:: ein Paket aus Streifen,
- Fig. 2:: das Bedämpfen des Paketes,
- Fig. 3:: verformte Pakete,
- Fig. 4:: Detailansichten aus Möbeln, und
- Fig. 5:: einen Stab

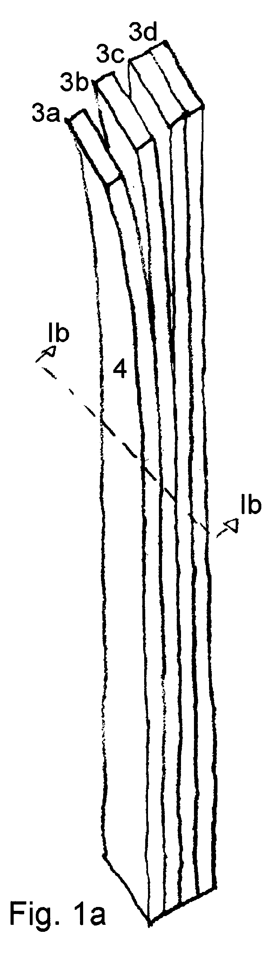

Fig. 1a zeigt den Ausgangspunkt des erfindungsgemäßen Verfahrens, nämlich ein Paket von lose übereinandergelegten, in Verlaufsrichtung geraden, im Querschnitt rechteckigen, Bambusstreifen 3a,b,c,d, welches am oberen Ende des dargestellten Paketes 4 lediglich aus Gründen der Übersichtlichkeit etwas aufgefächert dargestellt ist, in Wirklichkeit jedoch dicht nebeneinander liegt.

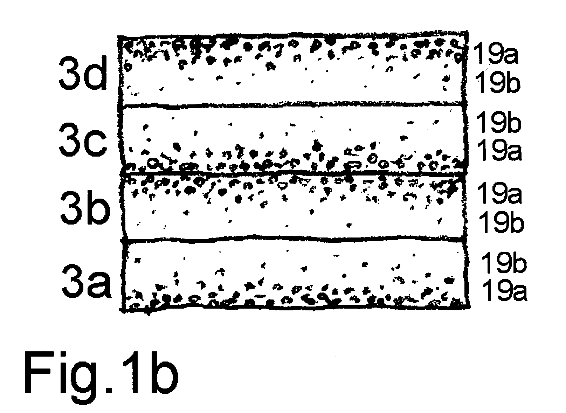

Fig. 1b zeigt, dass die insgesamt vier Streifen jeweils mit Außenseite 19a gegen Außenseite 19a gelegt sind und dementsprechend auch mit Innenseite 19b gegen Innenseite 19b, und zwar so, dass die jeweils äußersten Streifen 3a und 3d mit ihren Außenseiten 19a nach außen weisen, da diese die dichtesten Oberflächen darstellen.

Die Dimensionierung der Querschnitte der einzelnen Streifen 3a,b,c,d ist identisch und so gewählt, dass der Querschnitt des Paketes 4 gemessen in der Breite der einzelnen Streifen immer noch die größere Kantenlänge besitzt als quer hierzu, also gemessen entlang der Schmalseiten der vier Streifen 3.

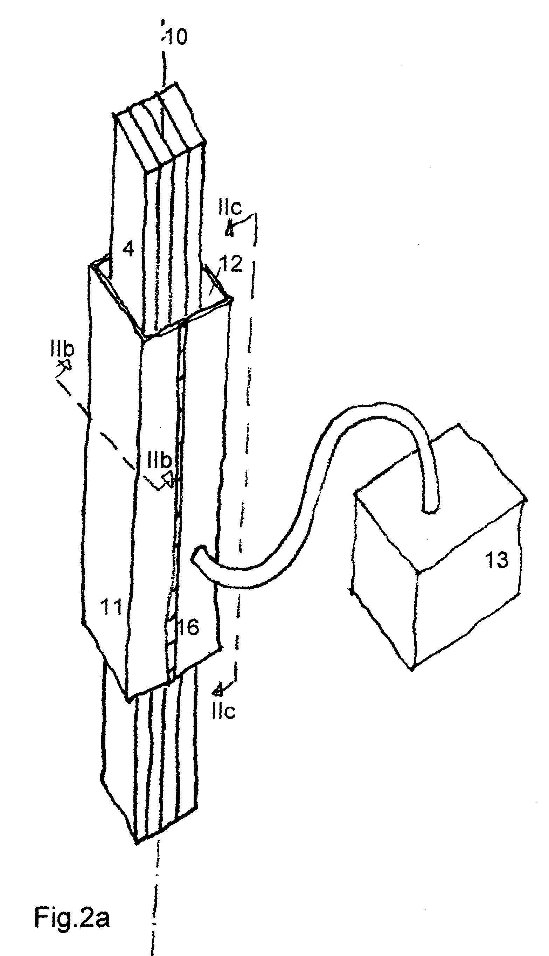

Fig. 2a zeigt, wie ein solches Paket 4 aus lose fluchtend übereinander gelegten Streifen bedämpft wird, indem ein bestimmter Längenabschnitt entlang der Längsachse 10 von einer Manschette 11 umhüllt wird und von einem Dampferzeuger 13 aus über einen Schlauch Dampf ins Innere der Manschette 11 und damit auf das Paket 4 zur Einwirkung gebracht wird.

Der Durchgangskanal 12 der Manschette 11 besitzt - zumindest an seinen stirnseitigen Öffnungen - nur einen geringfügig größeren Querschnitt als der Außenquerschnitt des Paketes 4, also einen vorzugsweise ebenfalls rechteckigen Querschnitt.

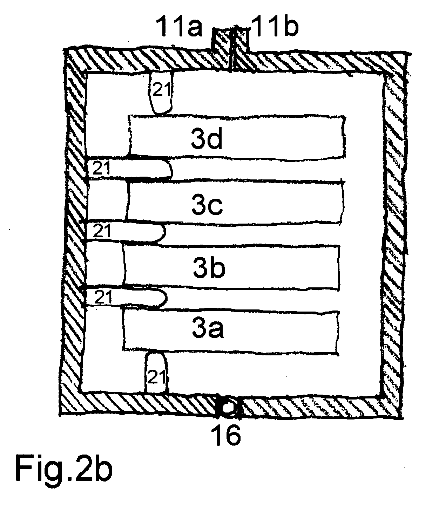

Wie die perspektivische Ansicht der Fig. 2a und vor allem die Querschnittsdarstellung der Fig. 2b zeigt, besteht die Manschette 11 vorzugsweise aus zwei Hälften 11a, 11b, die in einer in Richtung der Längsachse 10 verlaufenden Ebene getrennt und über ein entlang einer der Trennlinie angeordnetes Scharnier 16 beweglich miteinander gekoppelt sind. Dadurch können die beiden Hälften 11a, 11b auseinander geklappt, und nach Einlegen des Paketes 4 wieder geschlossen werden durch Verbindung der beiden Hälften am freien Ende gegeneinander. Auch ein Verschieben der Manschette 11 in Längsrichtung entlang des Paketes 4 ist möglich, da sowohl das Paket 4 als auch die Manschette 11 in Längsrichtung gerade ausgebildet sind.

Fig. 2b zeigt ferner, dass am Innenumfang der Manschette 11 Abstandshalter 20 angeordnet sein können, die auf den Außenflächen der äußersten Streifen 3a,d anliegen, um einen ausreichenden Abstand des Paketes 4 gegenüber der Manschette 11 zu gewährleisten, um das Bestreichen dieser Außenflächen durch Dampf zu gewährleisten.

An den Seitenflächen ragen vorzugsweise Abstandskeile 21 von der Manschette 11 nach Innen an den Fugen zwischen den Streifen 3, und halten diese bei geschlossener Manschette 11 auf Abstand. Die Abstandskeile 21 sind dabei vorzugsweise nicht über die gesamte Länge der Manschette 11 angeordnet, sondern nur punktuell, um das Eintströmen von Dampf auch zwischen die Streifen zu ermöglichen, und damit ein schnelles Erweichen der Streifen sicherzustellen.

Die Manschette 11 kann an nur einer Stelle eine Dampfeintrittsöffnung 14 aufweisen, wie in Fig. 2a dargestellt, wobei dann das Entweichen des Dampfes über den stirnseitigen Spalt zwischen Manschette 11 und Paket 4 erfolgt.

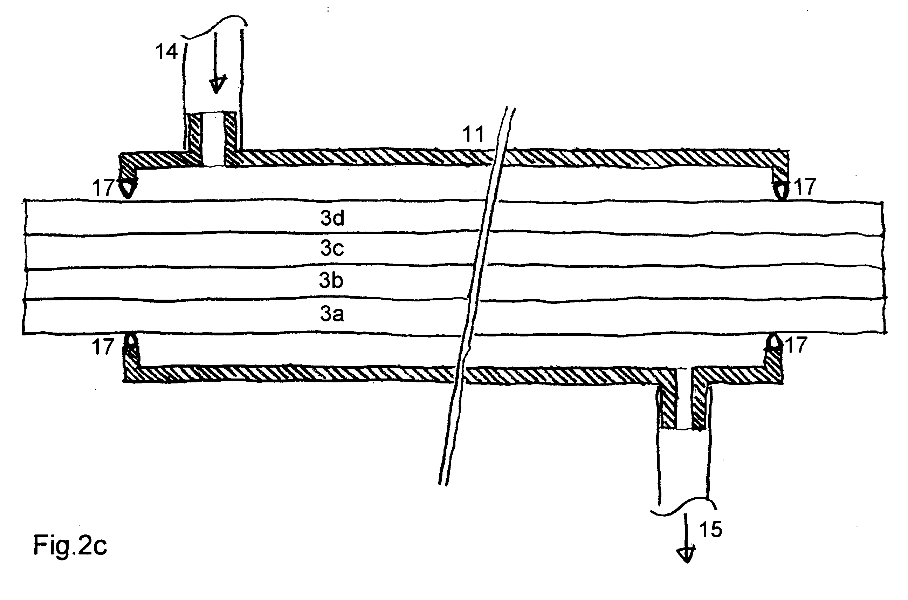

Fig. 2c zeigt im Längsschnitt eine andere Lösung, bei der die Stirnseiten der Manschette 11 durch Dichtungen 17 so gut als möglich gegenüber dem Paket 4 abgedichtet ist, und die Manschette 11 deshalb außer der Dampfeintrittsöffnung 14 auch eine Dampfaustrittsöffnung 15, diametral gegenüberliegend der Dampfeintrittsöffnung 14, aufweist, wodurch zuverlässige und reproduzierbare Strömungsverhältnisse in dem bedämpften Bereich erzeugt werden.

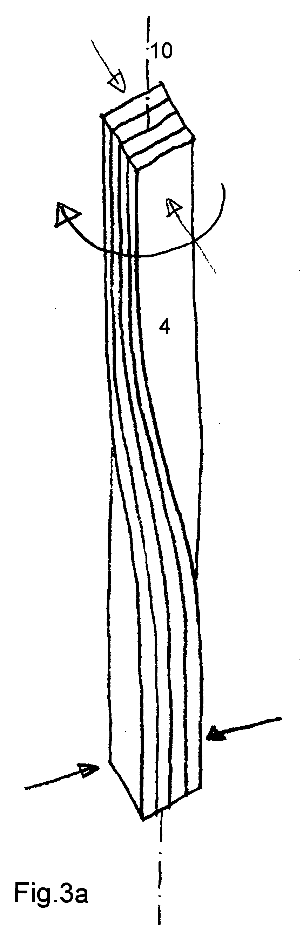

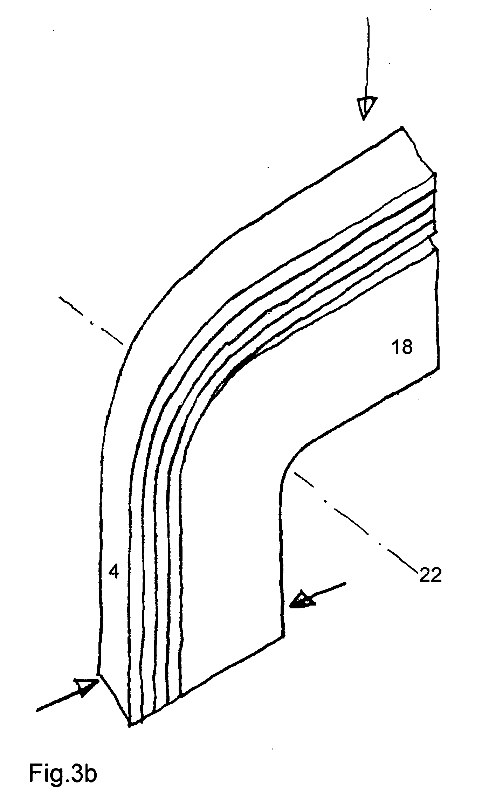

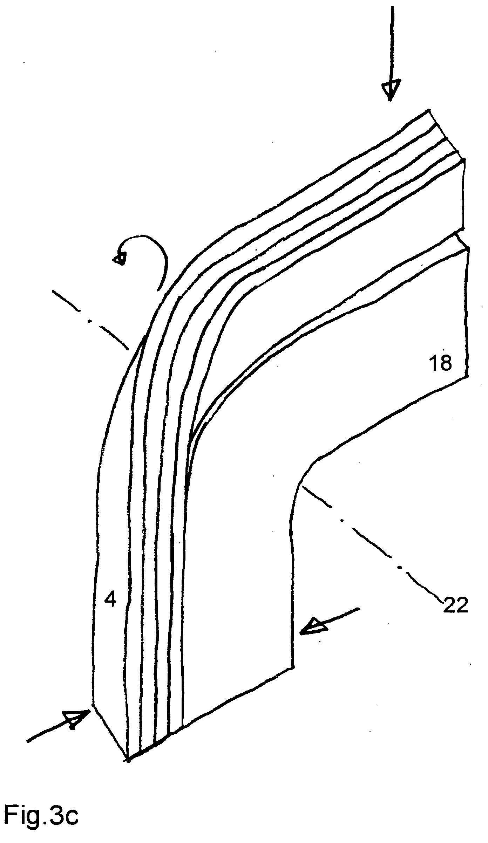

Die Fig. 3 zeigen unterschiedlich verformte Pakete 4, wie sie nach der Bedämpfung und Erweichung von Längsabschnitten des Paketes 4 mit Aufbringen entsprechender Kraft, vorzugsweise ausschließlich per Hand, erzeugt werden können.

Fig. 3a zeigt ein Paket 4, welches um die Längsachse 10 um 90° tordiert wurde, bei Beibehaltung der ansonsten geraden Erstreckung des Paketes 1 entlang der Längsachse 10. Es sind auch Tordierungen um mehr als 90°, bis hin zu 360°, möglich, abhängig lediglich von der zur Verfügung stehenden Länge für die Tordierung, zumindest bei den bevorzugten Abmessungen der Streifen von etwa 5 mm Dicke und etwa 25-30 mm Breite.

Fig. 3b zeigt eine konventionelle Biegung des Paketes 4, bei der nämlich die Biegeachse parallel zur Ebene der einzelnen Streifen liegt, und das Paket 4 in einem 90°-Winkel um diese Biegeachse 22 herum gebogen wird, und zwar mit Hilfe einer Schablone 18, deren Außenkontur als Anlagefläche für die Innenkontur der Biegung des gebogenen Paketes 4 dient.

Das Paket 4 wird gebogen, indem an einer Stelle vor der Biegung das Paket entsprechend der Doppelpfeile z. B. mittels einer handelsüblichen Schraubzwinge auf dem Außenumfang der Schablone 18 fixiert wird und anschließen von Hand in Richtung des dritten Pfeiles um die Biegung der Schablone 18 herumgelegt wird, mit anschließendem Fixieren in dieser Lage, ebenfalls wiederum mittels einer oder mehrerer Schraubzwingen nach der Biegung oder im Bereich der Biegung.

Für die Herstellung von Stäben 1 mit mehreren Biegungen kann eine Schabloneneinheit alle benötigten Schablonen 18 in fester, mechanischer Verbindung zueinander, über Holzstäbe oder ähnliches, für den Stab 1 insgesamt enthalten.

Fig. 3c zeigt ein Paket 4, welches um eine Schablone 18' herum ähnlich um ca. 90° gebogen wurde wie in Fig. 3b, jedoch zusätzlich im Bereich der Biegung um 90° um die Längsachse des Paketes tordiert wurde. Dadurch sind am einen Ende der Biegung die Seitenansichten der aufeinander liegenden Streifen 3a,b,c von der Seite der Biegung, also betrachtet in Richtung der Biegeachse 22, am anderen Ende der Biegung dagegen bei Betrachtung des Stabs radial von außen bezüglich der Biegeachse 22.

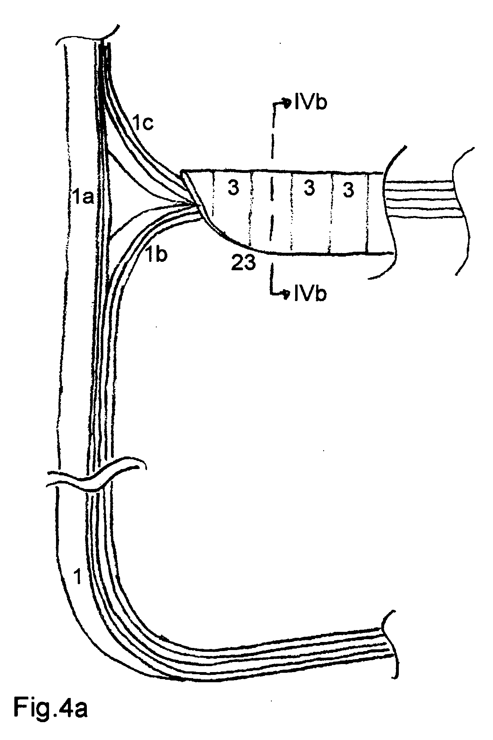

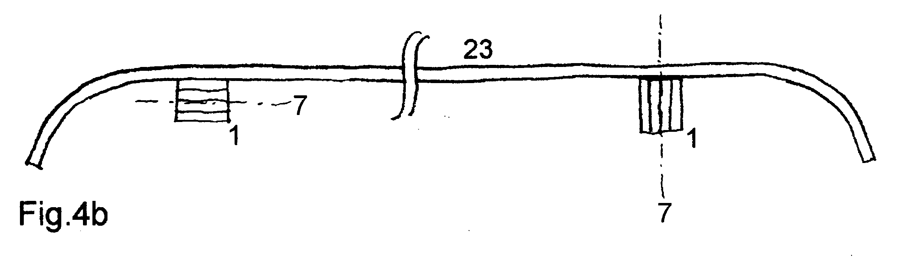

Die Fig. 4 zeigen ein Teil eines Möbels, z. B. eines Stuhles. Dieser besteht aus einem Stab 1 aus den besagten miteinander verleimten Bambusstreifen 3a,b,c,d, und einer Sitzfläche 23 die auf einem horizontalen Abschnitt des Stabs 1 aufliegt und auf diesem befestigt ist.

Die Sitzfläche 23 ist plattenförmig mit abgebogenem Ende dargestellt, und setzt sich aus mehreren nicht übereinander sondern nebeneinander in einer Schicht miteinander verleimten Streifen 3' aus Bambus zusammen. Die einschichtige Sitzfläche 23 kann mittels ähnlicher Bedämpfungsverfahren zumindest um eine Achse quer, insbesondere lotrecht stehend zur Verlaufsrichtung der Streifen ebenfalls verformt werden, wie in Fig. 4 dargestellt.

Fig. 4a zeigt ferner, dass der Stab 1 sich aufgabeln kann in unterschiedliche Äste 1a, 1b, die dann beispielsweise jeweils zwei Streifen umfassen, und die wiederum mit anderen Stäben oder Teilästen, in diesem Fall einen weiteren Ast 1c, verleimt werden können.

In diesem Fall bilden drei solcher Äste 1a,b,c mit je zwei Schichten ein Dreieck, in dem einer der Äste (1a) gerade durchgeht und die beiden übrigen Äste im jeweils 90°-Winkel gebogen sind, jeweils um eine Biegeachse 22 in diesem Fall lotrecht stehend zur Verlaufsrichtung der Äste.

Fig. 4b zeigt ferner, dass - je nach beabsichtigter Wirkung - die Abstützung der Sitzfläche 23 durch Stab 1 mehr oder weniger federnd ausgeformt sein kann:

Steht der Stab 1 mit den Kontaktflächen seiner Schichten lotrecht zur Ebene der Sitzfläche 23, so wird die Sitzfläche 23 hierdurch weniger stark federn als bei der in Fig. 4b linken Darstellung, bei der der Querschnitt des Stabs 1 so zur Sitzfläche angeordnet ist, dass die Kontaktflächen der miteinander verleimten Streifen 3 parallel zur Ebene der Sitzfläche 23 liegen.

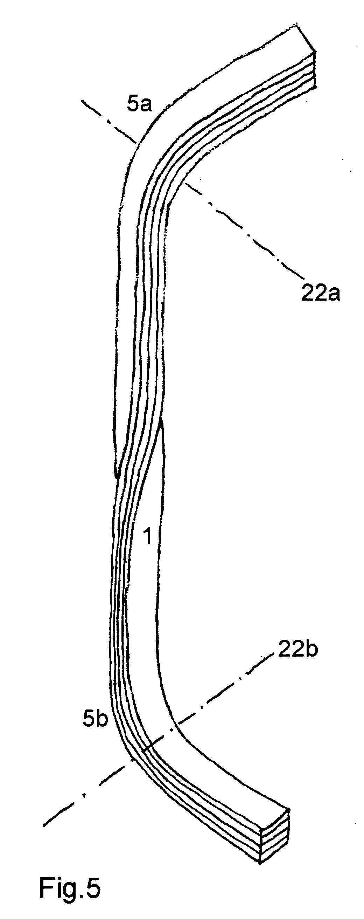

Fig. 5 zeigt ferner einen Stab 1', bei dem sich an einem geraden Abschnitt an den gegenüberliegenden Enden jeweils eine Biegung um ca. 90° anschließt, jedoch die Biegeachsen 22a bzw. 22b dieser Biegungen windschief, und in der Aufsicht betrachtet einander im rechten Winkel kreuzend, liegen.

Um dies zu ermöglichen, ist der Stab 1' in seinem geraden Bereich zwischen den Biegungen um 90° tordiert, um mit geringem Kraftaufwand die beiden Biegungen jeweils um eine Biegeachse 22a, 22b durchführen zu können, die parallel zu den Kontaktebenen zwischen den einzelnen Streifen 3 in der Biegung verläuft.

Die dargestellten und beschriebenen 90°-Biegungen können natürlich auch einen völlig anderen Biegewinkel zwischen 0° und 360° und sogar mehr als 360° aufweisen.

### BEZUGSZEICHENLISTE

- 1a,b,c: Stab
- 2: Möbelstücke
- 3a,b,c: Bambus-Streifen
- 4: Paket
- 5a,b 6: zu biegende Stelle
- 7: größter Durchmesser
- 8: Achse
- 9: Platte
- 10: Längsachse
- 11: Manschette
- 11a,b: Hälfte
- 12: Durchgangskanal
- 13: Dampfquelle
- 14: Dampf-Eintrittsöffnung
- 15: Dampf-Austrittsöffnung
- 16: Scharnier
- 17: Dichtung
- 18: Schablone
- 19a: Außenseite
- 19b: Innenseite
- 20: Abstandshalter
- 21: Abstandskeile
- 22: Biegeachse
- 23: Sitzfläche

## Patentansprüche

1. Verfahren zum Herstellen von Stäben (1) mit massivem Querschnitt aus übereinander gelegten und verleimten Schichten aus Bambusstreifen (3a,b,c,...) insbesondere für Möbelstücke (2),
**dadurch gekennzeichnet, dass**
die Pakete (4) aus Bambusstreifen (3a,b,c,..) während der Herstellung der Stäbe auch um die Längsachse des Paketes (4) tordiert werden und in diesem Zustand abgekühlt und verleimt werden.

2. Verfahren nach Anspruch 1,
**dadurch gekennzeichnet, dass**
die Pakete (4) aus Bambusstreifen (3a,b,c,..) vor dem Biegen bzw. Tordieren durch lediglich partielle Bedämpfung im Bereich der vorgesehenen Biegung bzw. Tordierung bedämpft, anschließend gebogen bzw. tordiert und in dieser Stellung fixiert werden und noch vor dem vollständigen Auskühlen und Erstarren dieser Biegung bzw. Tordierung die in Verlaufsrichtung des Streifenpaketes nächste zu biegende bzw. tordierende Stelle analog behandelt wird.

3. Verfahren zum Herstellen von Stäben (1) mit massivem Querschnitt insbesondere für Möbelstücke (2a,b,c) aus übereinander gelegten und verleimten Schichten aus Bambusstreifen (3a,b,c,..),
**dadurch gekennzeichnet, dass**
die Pakete (4) aus Bambusstreifen (3a,b,c,..) vor dem Biegen bzw. Tordieren durch lediglich partielle Bedämpfung im Bereich der vorgesehenen Biegung bzw. Tordierung bedämpft, anschließend gebogen bzw. tordiert und in dieser Stellung fixiert werden und noch vor dem vollständigen Auskühlen und Erstarren dieser Biegung bzw. Tordierung die in Verlaufsrichtung des Streifenpaketes nächste zu biegende bzw. tordierende Stelle analog behandelt wird.

4. Verfahren nach Anspruch 3,
**dadurch gekennzeichnet, dass**
- die Pakete (4) aus Bambusstreifen (3a,b,c,...) während der Herstellung der Stäbe um die Längsachse (10) des Paketes (4) tordiert werden und in diesem Zustand abgekühlt und verleimt werden, und/oder insbesondere
- die Pakete (4) nach dem Abkühlen und Erstarren, insbesondere nach Herstellung der Biegungen des Paketes (4) in seinem gesamten Verlauf, auseinandergenommen, zwischen den einzelnen Streifen (3a,b,c) der Pakete (4) flächig Kleber, insbesondere Holzleim oder Epoxid-Kleber, aufgebracht und die Pakete (4) verleimt, insbesondere unter Verpreßung der Streifen (3a,b,c) in Querrichtung, werden, und/oder insbesondere
- bei einer Dicke der Streifen von nicht mehr als 10 mm, insbesondere nicht mehr als 7 mm, insbesondere nicht mehr als 5 mm die Bedämpfungszeit pro Stelle nicht mehr als 15 Minuten, insbesondere nicht mehr als 12 Minuten, insbesondere nicht mehr als 10 Minuten, insbesondere nicht mehr als 7 Minuten, beträgt bei einer Dampftemperatur insbesondere zwischen 100°C und 120°C.

5. Verfahren nach einem der vorhergehenden Verfahrensansprüche,
**dadurch gekennzeichnet, dass**
- die Verformung der Pakete (4) im durch das Bedämpfen erweichten Zustand von Hand geschieht und lediglich die Lagefixierung in der verformten Stellung durch Hilfsvorrichtungen, insbesondere mittels Schraubzwingen an Form-Schablonen (18) geschieht, und/oder insbesondere
- die Schablonen (18) die Formgebung des Stabs (1) über seine gesamte Länge wiedergibt, und/oder insbesondere
- der Leim bzw. Kleber bereits insbesondere in dem zu verformenden Bereich (5a,b,c) vor dem Bedämpfen aufgebracht wird und es sich bei dem Kleber insbesondere um einen Heißkleber, der erst bei Erwärmung über eine Schwellentemperatur seine feste Konsistenz aufgibt und klebrig wird, handelt, und/oder insbesondere
- nach dem Verleimen der seitlich an den Paketen (4) zwischen den Streifen (3a,b,c) austretende Kleber sowie ggf. nicht fluchtende Kanten der Streifen (3a,b,c) eines Paketes (4) durch Schleifen entfernt bzw. egalisiert werden.

6. Verfahren nach einem der vorhergehenden Verfahrensansprüche,
**dadurch gekennzeichnet, dass**
- die Streifen (3a,b,c) innerhalb der Pakete (4) jeweils mit ihren Außenseiten (19a) bzw. Innenseiten (19b) gegeneinander gelegt werden, insbesondere so, dass auf den Außenseiten des Paketes jeweils Außenseiten (19a) zu liegen kommen, und/oder insbesondere
- ein Paket (4) zwischen drei und fünf Streifen (3a,b,c,..), insbesondere eine gerade Anzahl von Streifen, insbesondere vier Streifen, umfasst, und/oder insbesondere
- die Anzahl der Streifen (3a,b,c) so gewählt wird, dass der größte Durchmesser (7) des Paketes (4) in Richtung der Ebene der Streifen (3a,b,c) liegt.

7. Verfahren nach einem der vorhergehenden Verfahrensansprüche,
**dadurch gekennzeichnet, dass**
- das partielle Bedämpfen geschieht durch Anlegen einer Manschette um einen zu verformenden Längen-Bereich des Paketes (4) herum, und Einbringen von Dampf in den Zwischenraum zwischen Manschette und Außenumfang des Paketes (4) und insbesondere ständige Nachlieferung von Dampf während der Bedämpfungszeit in diesen Zwischenraum, und/oder insbesondere
- während der Bedämpfung die Manschette (11) zusätzlich beheizt, insbesondere elektrisch beheizt, wird, und/oder insbesondere
- der Durchgangskanal der Manschette (11) an deren stirnseitigen Enden gegenüber dem Außenumfang des Paketes (4) vor dem Beginn der Bedämpfung abgedichtet wird.

8. Verfahren nach einem der vorhergehenden Verfahrensansprüche,
**dadurch gekennzeichnet, dass**
- weder die einzelnen Streifen (3a,b,c) noch das Paket (4) vor oder während der Herstellung der Stab (1) in Längsrichtung (10) zusätzlich gestaucht oder gestreckt werden über das durch das Tordieren oder Biegen des Paketes (4) hinaus in einzelnen Querschnittsbereichen der Streifen auftretende Maß hinaus, und/oder insbesondere
- der Leim bzw. Kleber nach dem Bedämpfen aber bereits vor dem Verformen des Paketes zwischen den Streifen (3a,b,c) aufgebracht wird, und/oder insbesondere
- beim Verformen der Pakete (4) die Relativverschiebung insbesondere in Längsrichtung (10) der Bambusstreifen (3a,b,c) gegeneinander nicht behindert und insbesondere gefördert, insbesondere durch eine dabei bereits aufgetragene Gleitschicht, insbesondere in Form eines flüssigen Klebers, zwischen den Streifen (3a,b,c) gefördert, wird.

9. Dämpf-Manschette (11) zum partiellen Bedämpfen von Stäben aus Bambusstreifen (3a,b,c),
**dadurch gekennzeichnet, dass**
- die Manschette (11) einen beidseits offenen Durchgangskanal (12) aufweist entsprechend dem Querschnitt des aufzunehmenden Bambusstreifen-Pakete,
- der Durchgangskanal (12) eine mit einer Dampfquelle (13) verbindbare Dampfeintrittsöffnung (14) aufweist.

10. Manschette (11) nach Anspruch 1,
**dadurch gekennzeichnet, dass**
- die Manschette (11) in Längsrichtung wenigstens zweigeteilt ist und die beiden Hälften insbesondere über ein Scharnier (16) miteinander verbunden sind, und/oder insbesondere
- der Querschnitt des Durchgangskanals (12) im mittleren Bereich, insbesondere bis nahe zu den stirnseitigen Enden hin, einen erweiterten Querschnitt aufweist, und/oder insbesondere
- der Querschnittskanal zusätzlich eine Dampfabsaugöffnung aufweist.

11. Manschette (11) nach einem der vorhergehenden Ansprüche,
**dadurch gekennzeichnet, dass**
der Durchgangskanal an den stirnseitigen Enden gegen das Paket (4) aus Bambusstreifen (3a,b,c) anliegende Dichtungen aufweist.

12. Manschette (11) nach einem der vorhergehenden Ansprüche,
**dadurch gekennzeichnet, dass**
- die Manschette (11) beheizbar, insbesondere elektrisch beheizbar, insbesondere elektrisch beheizbar, ist, und/oder insbesondere
- die Manschette (11) über einen Temperatursensor und/oder einen Zeitvorwahlschalter für die Bedämpfungszeit aufweist, und/oder insbesondere
- der Durchgangskanal (12) gerade ist.

13. Gegenstand, insbesondere Einrichtungs-Gegenstand, insbesondere Möbel (2), aus Bambus mit
- einer Tragstruktur aus Stäben (1) mit geringem, massivem Querschnitt aus flächig miteinander verleimten Bambus-Streifen (3a,b,c).

14. Gegenstand nach Anspruch 13,
**dadurch gekennzeichnet, dass**
- an der Tragstruktur flächige Elemente befestigt sind, und/oder insbesondere
- die flächigen Elemente aus Platten (9) aus nebeneinander verleimten Bambusstreifen (3a,b,c), insbesondere in einer Schicht, bestehen und insbesondere die Funktion von Stuhl-Sitzflächen, Stuhl-Rückenlehnen, Tischplatten, Wänden und Türen von Schränken besitzen, und/oder insbesondere
- die flächigen Elemente ein Geflecht, insbesondere aus Bambusstreifen, sind.

15. Gegenstand nach Anspruch 13 oder 14,
**dadurch gekennzeichnet, dass**
- die flächigen Elemente aus einem Kompositwerkstoff, insbesondere mit Bambusanteil, bestehen, und/oder insbesondere
- die Stäbe (1) um ihre Längsachse tordiert sind, und/oder insbesondere
- die Stäbe (1) um wenigstens eine quer zur ihrer Verlaufsrichtung liegende Achse (8) gebogen und insbesondere um ihre Längsachse tordiert sind.

16. Gegenstand nach einem der vorhergehenden Ansprüche,
**dadurch gekennzeichnet, dass**
die Stäbe (1) sich in zwei oder auch mehrere Äste (1a,b) verzweigen und insbesondere mit den Ästen (1a,b) anderer Stab (1) verbunden, insbesondere schichtverleimt sind.

17. Gegenstand nach einem der vorhergehenden Ansprüche,
**dadurch gekennzeichnet, dass**
- bei nicht quadratischen bzw. nicht rotationssymmetrischen Querschnitten der Stab (1,1') der größte Durchmesser (7) des Stabs in Richtung der größten zu erwartenden Belastung in Querrichtung gerichtet ist, es sei denn, dass ein federn des Stabs (1,1') in Querrichtung erwünscht ist, und/oder insbesondere
- die Schichten der Stäbe mit den einander entsprechenden Seiten (Außenseite oder Innenseite des Bambusrohres) gegeneinander verleimt sind.
- die Bambusstreifen (3a,b,c) mit rechteckigem Querschnitt aus dem Bambusrohr herausgeschnitten sind.
